# EUROPÄISCHE PATENTANMELDUNG

(11) **EP 0 580 046 A1**
(43) Veröffentlichungstag der Anmeldung: **26.01.1994**
(21) Anmeldenummer: 93111065.4
(22) Anmeldetag: 10.07.1993
(51) Int. Cl.: B32B 27/08, C09D 133/12, C09D 151/00, C08J 7/04

(54) **UV-absorbierende Deckschichten für Co-Polycarbonate**

(30) Priorität: 21.07.1992 DE 4243588; 21.07.1992 DE 4223983
(71) Anmelder: Röhm GmbH, D-64293 Darmstadt (DE)
(72) Erfinder: May, Michael, Dr., D-64347 Griesheim (DE); Fischer, Jens-Dieter, Dr., D-64404 Bickenbach (DE)

(57) **Zusammenfassung**

Die Erfindung betrifft mehrschichtige Kunststoffkörper mit einer Kernschicht, bestehend aus mindestens 50 Gew.-% eines Co-Polycarbonats A) aufgebaut aus:
a1) 95 bis 5 Gew.-% Bisphenol-A-Einheiten und
a2) 5 bis 95 Gew.-% Bisphenol-Einheiten gemäß Formel I: 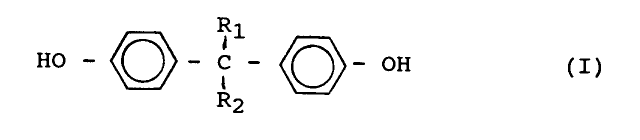 worin R₁ für Wasserstoff oder einen ggfs. verzweigten Alkylrest mit 1 bis 6 Kohlenstoffatomen und R₂ für einen ggfs verzweigten Alkylrest mit 1 bis 6 Kohlenstoffatomen, für einen ggfs. substituierten Cycloalkylrest mit 5 bis 16 Kohlenstoffatomen, für Phenyl, Benzyl und/oder 2-Phenylethyl, sowie R₁ und R₂ gemeinsam für einen ggfs. substituierten Cycloalkylidenrest mit 4 bis 16 Kohlenstoffatomen stehen können,
und mindestens einer darauf angebrachten, UV-Absorber enthaltenden, thermoplastischen Schicht TS aus einem Polymethacrylat D), aufgebaut aus:
d1) 0,01 bis 40 Gew.-Teilen UV-Absorber und/oder UV-absorbierenden Monomeren und
d2) 99,99 bis 60 Gew.-Teilen eines mit dem Co-Polycarbonat A) verträglichen Methacrylat-Copolymerisats B).

## Beschreibung

### Gebiet der Erfindung

Die Erfindung betrifft UV-Licht absorbierende, gut haftende Deckschichten für Co-Polycarbonate A), bestehend aus Methacrylat-Copolymerisaten B) enthaltend UV-Absorber in einpolymerisierter oder niedermolekularer Form.

### Stand der Technik

Polycarbonat-Kunststoffe weisen nur begrenzte Stabilität gegen Witterungseinflüsse auf. Vor allem werden sie durch UV-Strahlung geschädigt, was sich in Verfärbung und insbesondere in Mattwerden ursprünglich glänzender Oberflächen äußert. Das Mattwerden ist das sichtbare Erscheinungsbild des durch die UV-Strahlung bewirkten Makromolekülabbaus unter Ausbildung einer Vielzahl feinster Haarrisse, beginnend in der Kunststoffoberfläche. In den Polycarbonat-Kunststoff eingebrachte UV-Absorber vermögen zwar das Innere eines daraus hergestellten Kunststoffkörpers zu schützen, nicht jedoch dessen Oberflächen.
Zahlreiche Patentschriften haben daher Beschichtungen für Polycarbonat-Kunststoff zum Gegenstand, die diese vor Witterungseinflüssen schützen sollen. Als Schichtmaterialien werden hierbei insbesondere Polymethacrylat-Kunststoffe, enthaltend UV-Absorber eingesetzt, wobei einerseits das Polymethacrylat eine hohe Witterungsstabilität aufweist und wobei andererseits die UV-Absorberanteile in der Schicht das UV-Licht wirksam aus dem Lichtspektrum herausfiltern, bevor es den Polycarbonat-Kunststoff erreicht.
Beispielhaft für solche Beschichtungen seien folgende Patentschriften genannt: DE-AS 16 94 273 (= US 3 582 398), US 4 666 779, US 4 576 870, DE-A 28 32 675 sowie DE-A 32 44 953 (= EP-A 110 238).
Diese Deckschichten weisen aufgrund ihrer Unverträglichkeit mit den Polycarbonat-Substraten im allgemeinen eine nur mangelhafte Haftung, insbesondere nach Bewitterung, auf.
Daher ist man in jüngerer Zeit dazu übergegangen, Deckschichten zu entwickeln, deren polymere Komponenten mit dem Polycarbonat-Substrat verträglich sind. Beim Auftrag solcher Deckschichten bilden sich vermutlich Interdiffusionszonen zwischen Deckschicht und Polycarbonat-Substrat aufgrund der Polymerverträglichkeit aus, die die Haftung der Deckschicht auf dem Substrat deutlich verbessern. Die im folgenden beispielhaft angeführten Patente bzw. Patentanmeldungen haben diese Aufgabenstellung zum Gegenstand.
EP-A 203 487 beschreibt verträgliche Polymermischungen, bestehend aus einem Polycarbonat, wie beispielsweise Bisphenol-A-Polycarbonat, und einem Copolymerisat aus monomeren Estern der Acryl- und/oder der Methacrylsäure mit C1-C10-Alkoholen und einem UV-absorbierenden Monomeren. Solche Polymermischungen werden insbesondere als Beschichtungen zur Verbesserung der Lichtbeständigkeit von Kunststoffen eingesetzt.
In EP 369 094 und EP-A 372 213 werden mehrschichtige Kunststoff-Körper auf Polycarbonat-Basis, insbesondere auf Bisphenol-A-Polycarbonat-Basis beschrieben, mit einer darauf angebrachten, eine dauerhafte Haftung aufweisenden und UV-Absorber enthaltenden (schlagzähmodifizierten) Polymethacrylatschicht, welche aus Methacrylatcopolymerisaten aufgebaut ist, die mit Polycarbonat, insbesondere Bisphenol-A-Polycarbonat, verträgliche Mischungen bilden. Die Methacrylatcopolymerisate enthalten neben Methylmethacrylat vorzugsweise Maleinimide, Methacrylamide und Methacrylate mit carbocyclischen Substituenten.

### Aufgabe und Lösung

Mischungen von Polymerisaten sind in der Regel unverträglich. Trotz einer wachsenden Zahl von Gegenbeispielen, die in den letzten Jahren aufgefunden wurden, werden die Erfahrungen des Fachmanns auch heute noch von folgendem Satz bestimmt: "Miscibility is the exception, immiscibility is the rule" (siehe hierzu: Kirk-Othmer, Encyclopedia of Chemical Technology, 3rd. Ed., Vol. 18, Seite 460, J. Wiley, 1982).
In letzter Zeit hat sich das Interesse an verträglichen Polymermischungen verstärkt, die in der Regel den Vorteil der thermoplastischen Verarbeitbarkeit mit dem der Wiederverwertbarkeit und dem der Transparenz vereinen. Verbunden mit o.g. Vorteilen sind in der Regel reproduzierbar einstellbare, im allgemeinen durchaus befriedigende mechanische Eigenschaften.
Vom Bisphenol-A-Polycarbonat sind durch teilweisen Ersatz der Bisphenol-A-Gruppe, beispielsweise durch Cyclohexyliden- oder Cyclododecyliden-Bisphenol, sogenannte Co-Polycarbonate A) ableitbar, die deutlich höhere Wärmeformbeständigkeiten als Bisphenol-A-Polycarbonat aufweisen. Demgegenüber stehen allerdings eine relativ hohe Unbeständigkeit gegenüber Witterungseinflüssen (wie auch beim Bisphenol-A-Polycarbonat), ein gegenüber Bisphenol-A-Polycarbonat deutlicher Abfall der Zähigkeit und eine hohe Schmelzeviskosität, die hohe Verarbeitungstemperaturen und damit eine thermooxidative Belastung der Komponente A) bedingt.
Bei der Suche nach verträglichen Polymerlegierungen PM bestehend aus Co-Polycarbonaten A) und witterungsstabilen Methacrylat-Copolymerisaten D) [und dies gilt nicht nur für Mischungen aus A) und D)] kann der Fachmann im allgemeinen keine Analogieschlüsse zum Bisphenol-A-Polycarbonat (oder allgemein: anderen Mischungskomponenten) treffen. Beispielsweise können geringste Veränderungen der Copolymerisat-Zusammensetzung bei verträglichen Mischungen aus zwei Copolymerisaten zur Unverträglichkeit führen [vgl. hierzu beispielsweise J. Pfennig, H. Keskkula, J. Barlow and D. Paul, Makromolecules 18, Seiten 1937 ff (1985); H.W. Kammer et al. Acta Polymerica 40(2), Seiten 75 ff (1989)]. Überraschenderweise wurde nun gefunden, daß Methacrylat-Copolymerisate D), aufgebaut aus
d1) 0,01 bis 40 Gew.-Teilen UV-Absorber und/oder UV-absorbierenden Monomeren und
d2) 99,99 bis 60 Gew.-Teilen eines Copolymerisats B), aufgebaut aus
b1) 99 bis 1 Gew.-% Methylmethacrylat-Einheiten und gegebenenfalls weiteren von b2) verschiedenen α,β-ungesättigten Monomereinheiten in Mengen von 0 bis 40 Gew.-% und
b2) 1 bis 99 Gew.-% Acryl- und/oder Methacrylestereinheiten der Formel II mit carbocyclischen Gruppen im Esterrest: 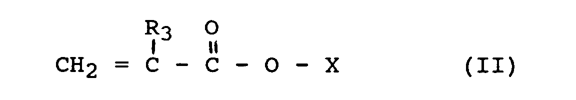 worin R₃ für Wasserstoff oder Methyl und X für Y oder Q-Y steht, wobei Y für einen gegebenenfalls substituierten Cycloalkylrest mit 5 bis 12 Kohlenstoffatomen oder für einen gegebenenfalls alkyl- bzw. oxyalkylsubstituierten Arylrest mit 6 bis 12 Kohlenstoffatomen, und Q für eine Alkylengruppe mit 1 bis 6 Kohlenstoffatomen, die auch verzweigt sein kann, oder für eine Oxialkylengruppe mit 2 bis 6 Kohlenstoffatomen stehen kann,
wobei das Copolymerisat B ein Molekulargewicht Mw von mindestens 3 x 10⁴ Dalton besitzt,
und/oder einem mindestens zweiphasigen Schlagzähmodifizierungsmittel C, aufgebaut aus:
c1) 20 bis 90 Gew.-Teilen mindestens einer ggfs. vernetzten Zähphase mit einer Glasübergangstemperatur Tg < 10 Grad C und
c2) 80 bis 100 Gew.-Teilen mindestens eines mit c1) wenigstens teilweise kovalent verknüpften mit der Komponente A) verträglichen Copolymerisats, das in der Zusammensetzung dem Methacrylat-Copolymerisat B) entspricht,
mit einem Co-Polycarbonat A), aufgebaut aus:
a1) 95 bis 5 Gew.-% Bisphenol-A-Einheiten und
a2) 5 bis 95 Gew.-% Bisphenol-Einheiten der Formel I 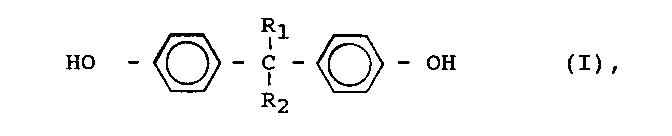 worin R₁ für Wasserstoff oder einen ggfs. verzweigten Alkylrest mit 1 bis 6 Kohlenstoffatomen und R₂ für einen ggfs. verzweigten Alkylrest mit 1 bis 6 Kohlenstoffatomen, für einen ggfs. substituierten Cycloalkylrest mit 5 bis 16 Kohlenstoffatomen, für Phenyl, Benzyl und/oder 2-Phenylethyl, sowie R₁ und R₂ gemeinsam für einen ggfs. substituierten Cycloalkylidenrest mit 4 bis 6 Kohlenstoffatomen stehen können,
verträgliche Mischungen bildet und als Deckschicht TS auf dem Co-Polycarbonat A) eine ausgezeichnete Schutzwirkung gegenüber UV-Licht bei sehr guter Haftung bietet. Bei Anwesenheit des Schlagzähmodifizierungsmittels C) weisen die Methacrylat-Copolymerisate D) als Deckschicht TS auf dem Co-Polycarbonat A) darüber hinaus noch eine hohe Beständigkeit gegen Schlagbeanspruchung auf.

### Die Co-Polycarbonate A)

Die Co-Polycarbonate A) bestehen aus Bisphenol-A-Einheiten und Bisphenol-Einheiten gemäß Anspruch 1, wie beispielsweise 1,1-Bis-(4-hydroxyphenyl)cyclopentan, 1,1-Bis-(4-hydroxyphenyl)cyclohexan, 1,1-Bis-(4-hydroxyphenyl)-3,3,5-trimethylcyclohexan, 1,1-Bis-(4-hydroxyphenyl)cyclooctan, 1,1-Bis-(4-hydroxyphenyl)cyclododecan, 2,2-Bis-(4-hydroxyphenyl-1-phenyl-ethan, 1,1-Bis-(4-hydroxyphenyl)-1-phenyl-methan, 3,3-Bis-(4-hydroxyphenyl)-2,4-dimethylpentan oder 4,4-Bis-(4-hydroxyphenyl)-heptan, 1,1-Bis(4-hydroxyphenyl)-cyclododecan und 1,1-Bis(3,5-dimethyl-4-hydroxyphenyl)cyclododecan (vgl. hierzu auch Kirk-Othmer, Encyclopedia of Chemical Technology, 3rd. Ed., Vol. 18, Seiten 479 bis 494, Vol. 6, Seiten 106 bis 116, J. Wiley, 1982). O.g. Bisphenole besitzen als Homo-Polycarbonate, d.h. nach Umsetzung mit Phosgen, teilweise deutlich höhere Glasübergangstemperaturen Tg als Bisphenol-A-Polycarbonat und damit auch höhere Wärmeformbeständigkeiten. Dementsprechend steigen die Glasübergangstemperaturen Tg von Co-Polycarbonaten A), enthaltend Bisphenol-A-Einheiten und o.g. Bisphenole mit steigendem Anteil an o.g. Bisphenolen an. Beispielsweise weist das Homo-Polycarbonat mit 1,1-Bis-(4-hydroxyphenyl)-3,3,5-Trimethylcyclohexan-Einheiten eine Tg = 239 Grad C auf, gegenüber Bisphenol-A-Polycarbonat mit einer Tg = 148 Grad C. Im Handel erhältliche Co-Polycarbonate (z.B. APEC-HT Ⓡ -Typen, Bayer), bestehend aus vorgenannten Einheiten, besitzen Glasübergangsteperaturen von bis zu etwa 190 Grad C.
Die mittleren Molekulargewichte M_{w} der Co-Polycarbonate (zur Bestimmung von M_{w} s.o.) liegen im Bereich von 2 x 10⁴ bis 6 x 10⁴ Dalton und die Vicat-Erweichungstemperaturen, gemessen nach DIN 53 460, entsprechend etwa den Glasübergangstemperaturen.

### Die Polymethacrylat-Copolymerisate B)

Die Herstellung der Copolymerisate B) wird nach bekannten Verfahren zur Polymerisation α,β-ungesättigter Verbindungen, insbesondere durch radikalische Polymerisation, beispielsweise in Substanz, in Lösung oder als Suspensionspolymerisation durchgeführt: Als Polymerisationsinitiatoren können dazu Azoverbindungen, wie Azodiisobutyronitril, Peroxide, wie Dibenzoylperoxid oder Dilauroylperoxid, oder Redoxsysteme dienen, oder die Startradikale können strahlenchemisch erzeugt werden (vgl. hierzu beispielsweise H. Rauch-Puntigam, Th. Völker "Acryl- und Methacrylverbindungen", Springer-Verlag, Heidelberg, 1967; Kirk-Othmer, Encyclopedia of Chemical Technology, Vol. 1, Seiten 386 ff, J. Wiley & Sons, 1978).

Die erfindungsgemäßen Copolymerisate B) enthalten vorzugsweise 5 bis 95 Gew.-% Methylmethacrylat-Einheiten, besonders bevorzugt 20 bis 90 Gew.-%, ganz besonders bevorzugt 50 bis 80 Gew.-%, und entsprechend ganz besonders bevorzugt 20 bis 50 Gew.-% mit dem Methylmethacrylat copolymerisierte Acrylat- und/oder Methacrylat-Einheiten der o.g. Formel I. Das Copolymerisat B) kann in Mengen von 0 bis 40 Gew.-%, insbesondere in Mengen von 1 bis 25 Gew.-% weitere α,β-ungesättigte Monomereinheiten enthalten, die im allgemeinen keine UV-absorbierenden Moleküleinheiten aufweisen, wie beispielsweise Styrol, α-Methylstyrol, Acrylsäure, Methacrylsäure und/oder C2- bis C10-Alkylester der Acryl- oder Methacrylsäure, wobei die Alkylgruppen gegebenenfalls verzweigt sein können. Die Verträglichkeit von Polymeren hängt von ihrem Molekulargewicht ab, und zwar nimmt die Verträglichkeit von Polymeren in der Regel mit steigendem Molekulargewicht ab. Die erfindungsgemäßen Copolymerisate B) weisen mittlere Molekulargewichte M_{w}, wie sie beispielsweise mit Hilfe der Lichtstreuung oder Gelpermeationschromatographie bestimmbar sind (s.o.), von über 3 x 10⁴ bis etwa 3 x 10⁵ Dalton, vorzugsweise 5 x 10⁴ bis 1,5 x 10⁵ Dalton auf.
Dies entspricht reduzierten Viskositäten η_{spez}/C, gemessen nach DIN 51 562 in Chloroform als Lösungsmittel, von etwa 18 bis 110 cm³g⁻¹, vorzugsweise 30 bis 75 cm³g⁻¹. Die Einstellung der Molekulargewichte erfolgt durch Polymerisation in Gegenwart von Molekulargewichtsreglern, wie insbesondere von den dazu bekannten Mercaptanen (vgl. hierzu beispielsweise Houben-Weyl, Methoden der organischen Chemie, Band XIV/1, Seite 66, 1961; Kirk-Othmer, Encyclopedia of Chemical Technology, Vol. 1, Seite 296, John Wiley & Sons, 1978).
Als Monomere der Formel I können beispielsweise eingesetzt werden: Cyclopentyl(meth)acrylat, Cyclohexyl(meth)acrylat, Cyclooctyl(meth)acrylat, 3,3,5-Trimethylcyclohexyl(meth)-acrylat, 2-Cyclohexylethyl(meth)acrylat, 3-Cyclohexylpropyl(meth)acrylat, 4-t-Butylcyclohexyl(meth)acrylat, Phenyl(meth)acrylat und dessen Alkyl, Alkoxy- und Alkylamin-substituierten Derivate mit 1 bis 6 Kohlenstoffatomen im Alkylrest wie insbesondere das p-Methoxyphenyl(meth)acrylat, die N,N-Dialkylaminosubstituierten Phenyl(meth)acrylate oder Alkyl(oxy)phenyl(meth)acrylate, wie 2-Phenoxyethyl(meth)-acrylate, Benzyl(meth)acrylat, 1-Phenylethyl(meth)acrylat, 2-Phenylethyl(meth)acrylat, 3-Phenylpropyl(meth)acrylat, 2-Naphthyl(meth)acrylat.

### Die Schlagzähmodifizierungsmittel C)

Die erfindungsgemäßen Schlagzähmodifizierungsmittel C), die in der Deckschicht im Gemisch mit Copolymerisat B) oder alleine neben dem UV-Absorber vorliegen können, sind Polymerisate, bestehend aus mindestens zwei Phasen, einer Zähphase c1) und einer wenigstens teilweise mit c1) kovalent verknüpften Hartphase c2). Sie sind schlagzähe, transparente und mit dem Co-Polycarbonat A) verträgliche Polymerisate. Weicht der Brechungsindex der Zähphase c1) zu sehr von dem der Hartphase c2) ab, muß der Brechungsindex von c1) durch geeignete Maßnahmen, beispielsweise durch den Einbau geeigneter, im allgemeinen hochbrechender, Comonomere in c1), an den der Hartphase c2) weitestgehend angeglichen werden, damit die das Schlagzähmodifizierungsmittel enthaltenden Beschichtungen für das Co-Polycarbonat transparent bleiben. Definitionsgemäß handelt es sich bei der Zähphase c1) um Polymerisate mit einer Glasübergangstemperatur Tg < 10 Grad C, bevorzugt < -10 Grad C (zur Bestimmung von Tg vgl. beispielsweise A. Turi, "Thermal Characterization of Polymeric Materials", Seiten 169 ff, Academic Press, New York, 1981).
Vorzugsweise werden für c1) Polyacrylate verwandt, deren Monomerbausteine eine Glasübergangstemperatur Tg des resultierenden Homo- bzw. Copolymerisats von < 10 Grad C, vorzugsweise < -10 Grad C gewährleisten. Die Glastemperatur der Homo- bzw. Copolymerisate ist bekannt bzw. läßt sich in bekannter Weise vorherbestimmen (vgl. hierzu beispielsweise J. Brandrup, E.H. Immergut, Polymer Handbook, III, Seiten 144 bis 148, J. Wiley, 1975). Vorzugsweise werden die Polyacrylate durch Polymerisation in wäßriger Emulsion, teilweise auch in Suspension, hergestellt. Besonders bevorzugt bei Polyacrylaten als Zähphase c1) ist die Herstellung durch Emulsionspolymerisation, da auf diesem Weg besonders einfach Materialien mit einem definierten Teilchenaufbau erzeugt werden können. Besonders bevorzugt sind hierbei Latex-Teilchen mit einer äußeren Hülle c2), bestehend aus dem Copolymerisat B) gemäß Anspruch 1, die im Inneren einen Gummi aus vernetztem Polyacrylat c1) enthalten. Ganz besonders bevorzugt sind Latex-Teilchen mit einem wenigstens dreistufigen Aufbau, also solche Teilchen, die im Polyacrylat c1) noch einen harten Polymerkern aufweisen. Insgesamt sollen diese Polyacrylat-Teilchen, die das Schlagzähmodifizierungsmittel C) ausmachen, einen Durchmesser von 0,1 bis 3 µm, bevorzugt 0,15 bis 1 µm (mit eingelagertem harten Kern) aufweisen. Prinzipiell ist der Aufbau solcher Latexteilchen und die Isolierung des Polymerisat-Feststoffs in DE-A 33 00 256 (= US 4 513 118) beschrieben.

Zweckmäßig arbeitet man bei der Emulsionspolymerisation im neutralen bzw. leicht sauren pH-Bereich, wobei die Verwendung langkettiger Alkylsulfate bzw. Alkylsulfonate günstig ist. Als Initiatoren dienen zweckmäßig die einschlägig bekannten Azoverbindungen und organische oder anorganische Peroxide, wie beispielsweise Persulfat/Bisulfit. Im allgemeinen liegt der Gehalt an Initiator im Bereich zwischen 10⁻³ und 1 Gew.-% bezogen auf die Monomeren. Als Acrylmonomere seien besonders genannt Ethylacrylat, Butylacrylat, 2-Ethylhexylacrylat sowie Alkoxylacrylate (vgl. US 3 488 321): in der Regel enthalten diese Acrylatelastomeren c1) noch vernetzende Monomere, wie beispielsweise Allylmethacrylat oder Ethylenglykoldimethacrylat, in Anteilen von 0,1 bis 5 Gew.-%. Besonders genannt seien Ethylacrylat und Butylacrylat als Hauptbestandteile.
Die Hartphase c2), die aus Copolymerisaten B) gemäß Anspruch 1 besteht, ist mit der Zähphase c1) wenigstens teilweise kovalent, d.h. zu mehr als 5 Gew.-% bezogen auf c2), verknüpft. Um die Verknüpfung effektiv zu gestalten, werden in die Zähphase c1) bevorzugt bekannte vernetzende Monomere mit mindestens zwei radikalisch aktivierbaren C=C-Doppelbindungen im Molekül, wie beispielsweise Di- oder Tri(meth)acrylate, eingebaut. Besonders bevorzugt sind sogenannte Pfropfvernetzer, wie Allyl(meth)acrylat oder Triallylcyanurat. Sie kommen vorzugsweise in Mengen von 0,1 bis 5 Gew.-% bezogen auf c1) zur Anwendung. Die Herstellung des Schlagzähmodifizierungsmittels C) kann in Anlehnung an bekannte Verfahren wie folgt vorgenommen werden. Im allgemeinen gibt man das Polymerisate c1), beispielsweise ausgewählt aus der Gruppe Polyolefine, Polydiene oder Polysiloxane, vor, vorzugsweise in Form einer Lösung in einem zur weiteren Verarbeitung geeigneten Lösungsmittel, beispielsweise in einem für die radikalische Polymerisation der Monomeren c2) bzw. B) geeigneten Lösungsmittel (vgl. H. Rauch-Puntigam, Th. Völker, Acryl- und Methacrylverbindungen, Springer, 1967; J. Brandrup, E.H. Immergut, Polymer Handbook, loc.cit.). Dabei ist u.a. die Tendenz des Lösungsmittels zu Übertragungsreaktionen zur berücksichtigen. Genannt seien beispielsweise Ester wie Butylacetat oder Ethylacetat, Kohlenwasserstoffe wie Toluol oder Ketone wie Aceton. Man geht im allgemeinen von Lösungen mit einem Gehalt von 10 bis 60 Gew.-% des Polymerisats c1) aus, denen die Monomeren gemäß c2) und Polymerisationshilfsmittel beispielsweise durch Eintropfen zugesetzt werden. Die Polymerisation wird in der Regel bei erhöhter Temperatur beispielsweise im Bereich zwischen 80 bis 140 Grad C durchgeführt. Als Initiatoren können die an sich üblichen wie Peroxide oder Azoverbindungen verwendet werden (vgl. hierzu H. Rauch-Puntigam, Th. Völker, Acryl- und Methacrylverbindungen, loc.cit.). Bei tiefer siedenden Lösungsmitteln ist z.B. Dibenzoylperoxid anwendbar, während bei höher siedenden Lösungsmitteln z.B. tert.-Butyl-Verbindungen wie tert.-Butylperoctoat zweckmäßig Anwendung finden können. Als Lösungsmittel können aber auch die das Polymerisat c2) aufbauenden Monomeren selbst dienen.
Vorteilhafterweise gewinnt man das Schlagzähmodifizierungsmittel C) durch Ausfällen aus der Lösung, beispielsweise mit Methanol als Fällungsmittel, oder durch Entgasen auf dem Extruder. Speziell im Fall von Latex-Dispersionen kann die Gewinnung von C) durch Fällung, Sprühtrocknung, Gefrierkoagulation oder durch Abquetschen auf dem Extruder gewonnen werden.

### Das Polymerisat D)

Das Polymerisat D) ist aufgebaut aus d1) UV-Absorbern und/oder UV-Absorbierenden Monomeren und aus d2) Copolymerisat B) und/oder Schlagzähmodifizierungsmittel C), wobei der UV-Absorber d1) in Copolymerisat B) und/oder in Schlagzähmodifizierungsmittel C) einpolymerisiert sein kann. Comonomere mit UV-absorbierenden Gruppen nach d1) sind beispielsweise aus EP-A 268 094 oder aus US 4 576 870 bekannt. Copolymerisate enthaltend monomere Bestandteile des Copolymerisats B) und Comonomere mit UV-absorbierenden Gruppen besitzen im allgemeinen ein mittleres Molekulargewicht M_{w} zwischen 3 x 10⁴ und 5 x 10⁵ Dalton. Als polymerisierbare UV-Absorber seien beispielhaft genannt: 2-(2'-Hydroxyphenyl)-5-methacrylamidobenzotriazol oder 2-Hydroxy-4-methacryloxybenzophenon (vgl. auch Houben-Weyl, 4. Aufl., Bd. 15, Seiten 256 bis 260, Verlag Chemie).
Die Komponente d1) im Polymethacrylat D) kann auch in ihrer monomeren Form als niedermolekularer, löslicher UV-Absorber vorteilhaft eingesetzt werden (vgl. Kirk-Othmer, Encyclopedia of Chemical Technology, Vol. 23, Seiten 615ff, J. Wiley & Sons, 1983). UV-Absorber dieser Art, die mit der polymeren Komponente beispielsweise in der Schmelze gemischt werden, sind beispielsweise 2-Hydroxy-4-n-octoxybenzophenon, 2-Hydroxy-4-methoxybenzophenon, 2-(2'-Hydroxy-5'-methylphenyl)-benzotriazol und andere Abkömmlinge des 2-Hydroxybenzophenons oder Benzotriazols, ferner 2,4-Dihydroxybenzoyl-furan, Salicylsäurephenylester, Resorcindisalicylat, Resorcinmono- und dibenzoat, Benzylbenzoat, Stilben, α,β-Methylumbelliferon und dessen Benzoat. Besonders bevorzugt sind UV-Absorber von geringer Flüchtigkeit bei der Verarbeitungstemperatur, d.h. besonders solche mit hohem Molekulargewicht. Der UV-Absorber soll in der gewählten Konzentration in den Polymerisaten möglichst homogen verteilt sein.

### Herstellung und Charakterisierung der Deckschicht TS

Die UV-Absorber enthaltende Deckschicht TS wird auf das Substrat, bestehend aus mindestens 50 Gew.-%, bevorzugt mindestens 75 Gew.-% Co-Polycarbonat A) bevorzugt durch Coextrusion oder Lackierung in Schichtdicken von 1 bis 10³ µm, bevorzugt von 1 bis 500 µm und ganz besonders bevorzugt von 1 bis 100 µm, nach ansonsten bekannten Techniken aufgebracht. Bei der Extrusionstechnik verwendet man bekannte Mehrstoff-Schlitzdüsen. Die Extrusion der Deckschicht TS erfolgt im allgemeinen bei Temperaturen zwischen 240 und 300 Grad C. Bei der Lackierung muß man mit Lösungsmitteln arbeiten, in denen das Polymethacrylat D) löslich oder stark quellbar ist. Beispielsweise kann hierzu 1-Methoxypropanol-2 verwendet werden.
Die erfindungsgemäß als Schutzschichten für Co-Polycarbonate A) wegen ihrer guten Haftung ausgezeichneten Methacrylat-Copolymerisate D) bilden entsprechd den oben genannten Kriterien verträgliche Polymermischungen. Die mit den Schichten TS versehenen Substrate bestehend aus Co-Polycarbonat A) oder aus Polymermischungen PM oder PL können noch mit weiteren Schichten, beispielsweise kratzfesten, wasserspreitenden, Antireflex- und/oder IR-reflektierenden Schichten, belegt sein.

### Charakterisierung der Verträglichkeit zwischen Co-Polycarbonat A) und dem die Deckschicht TS aufbauenden Polymethacrylat D)

Die Charakterisierung der Polymermischungen, bestehend aus Co-Polycarbonat A) und Polymethacrylat D), als verträgliche Mischungen erfolgt nach den anerkannten Kriterien (vgl. hierzu Kirk-Othmer, loc.cit., Vol. 18, Seiten 457 bis 460; Brandrup, Immergut, Polymer Handbook, 2nd. Ed., III-Seite 211, Wiley Interscience, 1975). Bei den verträglichen Polymermischungen (= Polymerlegierungen) beobachtet man einen Brechungsindex und eine einzige Glasübergangstemperatur, die zwischen denen der beiden Polymerisat-Komponenten A) und D) liegt. Als weiterer Hinweis auf die Verträglichkeit von Polymermischungen wird das Auftreten der LCST (Lower Critical Solution Temperature) herangezogen, deren Existenz auf dem Vorgang beruht, daß sich beim Erwärmen die bis dahin klare transparente Mischung in verschiedene Phasen auftrennt und optisch trübe wird. Dieses Verfahren stellt einen eindeutigen Beweis dafür dar, daß die ursprüngliche Polymermischung aus einer einzigen, im thermodynamischen Gleichgewicht befindlichen, homogenen Phase bestand (vgl. z.B. D.R. Paul, Polymer Blend & Mixtures, Seiten 1 bis 3, Martinus Nijhoff Publishers, Dordrecht, Boston 1985). Experimentell wird dazu der Trübungspunkt T_{Tr} (Trübungstemperatur) bestimmt, beispielsweise auf einer Kofler-Heizbank (vgl. Chem. Ing.-Technik, Seite 289, 1950).

### Vorteilhafte Wirkungen der Erfindung

Die erfindungsgemäßen mehrschichtigen Kunststoffkörper auf Basis des Co-Polycarbonats A) mit einer Deckschicht TS auf Basis eines Polymethacrylats D) finden vor allem im Freien, z.B. als Verglasungs- oder Bauelemente, ihre Anwendung, wo sie dem Sonnenlicht und den herrschenden Witterungsbedingungen ausgesetzt sind. Versuche zur Bewitterung, wie beispielsweise der Xenotest (Chem. Rdsch 27 (14), Seiten 2 bis 7, 1974) zeigen die deutliche Überlegenheit der erfindungsgemäßen mehrschichtigen Kunststoffkörper gegenüber unbeschichteten Kunststoff-Körpern, bestehend aus Co-Polycarbonat A). Die Deckschichten TS aus Polymethacrylat D) weisen aufgrund ihrer Verträglichkeit eine ausgezeichnete Haftung auf dem Substrat aus Co-Polycarbonat A) auf. Aufgrund ihrer Verträglichkeit sind die die Deckschichten bildenden Polymethacrylate D) ohne Verlust der Transparenz in die Co-Polycarbonat A)-Substrate einarbeitbar, was eine ausgezeichnete Recyclierbarkeit der erfindungsgemäßen mehrschichtigen Kunststoffkörper gewährleistet.

Die nachfolgenden Beispiele dienen zur Erläuterung der Erfindung.

Folgende Eigenschaften wurden bestimmt:
1. An Mischungen aus Co-Polycarbonat A) und Deckschichtmaterial D):
1.1. LCST durch Messung des Trübungspunkts auf einer Kofler-Heizbank (s.o.).
1.2. Vicat-Erweichungstemperatur VET in Grad C nach DIN 53 460.
1.3. Glasübergangstemperatur Tg per Differentialthermoanalyse DSC (s.o.)
1.4. Am Polymethacrylat D): Reduzierte Viscosität η_{spec}/C in Chloroform nach DIN 51 562.
2. An beschichteten Substraten aus Co-Polycarbonat A):
2.1. Xenotest-Bewitterung nach DIN 53 387 mit anschließender visueller Beurteilung des Prüfkörpers.

### BEISPIELE

### Beispiel 1

### Herstellung des Polymethacrylats D1)

In einem Gemisch aus 47 Gew.-Teilen Methylmethacrylat, 46 Gew.-Teilen Phenylmethacrylat und 2 Gew.-Teilen Ethylacrylat werden unter Rühren 5 Gew.-Teile (2'-Hydroxyphenyl)-5-methacrylamidobenztriazol (polymerisierbarer UV-Absorber), 0,2 Gew.-Teile Dilauroylperoxid als Polymerisationsinitiator sowie 0,55 Gew.-Teile Dodecylmercaptan als Molekulargewichtsregler gelöst. Diese Lösung wird im Wasserbad in einem Folienschlauch 18 Stunden bei 50 Grad C und 22 Stunden bei 60 Grad C polymerisiert und zur Endpolymerisation im Trockenschrank 3 Stunden bei 110 Grad C getempert. Die reduzierte Viskosität des resultierenden Polymerisats D1) η_{spez.}/C in Chloroform beträgt 73 cm³g⁻¹ entsprechend einem mittleren Molekulargewicht M_{w} von etwa 150 000 gmol⁻¹.

### Beispiel 2

### Herstellung und Charakterisierung von Polymermischungen aus Co-Polycarbonat A) und Polymethacrylat D1)

Das gemäß Beispiel 1 hergestellte Polymethacrylat D1) wird mit dem Co-Polycarbonat APEC Ⓡ HT 9351 (BAYER AG), einem Co-Polycarbonat aus 65 Mol.-% Bisphenol-A- und 35 Mol.-% 3,3,5-Trimethylcyclohexyliden-Bisphenol-Einheiten, in einem Trommelmischer in den angegebenen Mischungsverhältnissen gemischt und auf einem Einschneckenmischextruder als Band extrudiert.

An Bandproben werden visuelle Prüfungen, Messungen der Glasübergangstemperatur Tg, Messungen der Vicat-Erweichungstemperatur VET sowie die Trübungstemperatur T_{Tr} (LCST) bestimmt.

| Mischungsverhältnis Co-Polycarbonat APEC Ⓡ HT 9351/ Polymethacrylat D1 | visuelle Beurteilung | Tg (^{o}C) | VET (^{o}C) | T_{Tr} (LCST) (^{o}C) |
|---|---|---|---|---|
| 90/10 | klar, leicht gelblich | 162 | - | 260 |
| 70/30 | klar, leicht gelblich | 138 | - | 266 |
| 50/50 | klar, leicht gelblich | 135 | 137 | 270 |
| 30/70 | klar, leicht gelblich | 125 | - | >270 |
| 10/90 | klar, leicht gelblich | 118 | - | >270 |

Als Beweis für die gute Verträglichkeit zwischen APEC Ⓡ HT 9351 und Polymethacrylat D1 sind die einheitlichen Glasübergangsstufen Tg und das Auftreten der LCST (T_{Tr}) bei hohen Temperaturen anzusehen.

### Beispiel 3

### Beschichtungen von Substraten aus Co-Polycarbonat A) mit Polymethacrylat D1) und anschließende Bewitterung der Substrate

Herstellung des Lacks L enthaltend Polymethacrylat D1): 22,5 Gew.-% des gemäß Beispiel 1 hergestellten und gemahlenen Polymethacrylats D1) werden in 77,5 % Methylethylketon bei Raumtemperatur innerhalb von 2 Stunden gelöst. Mit dem Lack L wurden 2 mm dicke Platten aus APEC Ⓡ HT 9351 durch Aufrakeln eines ca. 150 µm dicken Lackfilms entsprechend einer Trockenfilmdicke von 35 µm beschichtet.
Die solchermaßen beschichteten Proben aus Co-Polycarbonat APEC Ⓡ HT 9351 wurden im Xenotest (untere Grenzwellenlänge 300 nm) bewittert und mit unbeschichteten Proben verglichen.

| Bewitterungszeit im Xenotest (h) | Co-Polycarbonat APEC Ⓡ HT 9351 | |
|---|---|---|
| | mit Schichten aus D1 gemäß Beispiel 3 | ohne Schicht |
| | (visuelle Charakterisierung) | |
| 500 | unverändert | merkl. Gelbstich |
| 1 000 | unverändert | starker Gelbstich |
| 2 000 | unverändert | starker Gelbstich bewitterte Fläche matt |
| 3 000 | unverändert | " |
| 4 000 | leichter Gelbstich einige Risse | " |
| 5 000 | leichter Gelbstich mehrere Risse | starker Gelbstich bewitterte Fläche matt, mehrere Risse |

Die Versuche belegen eindeutig die Verbesserung der Witterungsstabilität des Co-Polycarbonats APEC Ⓡ HT 9351 nach Beschichtung mit dem erfindungsgemäßen Polymethacrylat D1).

## Patentansprüche

1. Mehrschichtige Kunststoffkörper mit einer Kernschicht, bestehend aus mindestens 50 Gew.-% eines Co-Polycarbonats A), aufgebaut aus :
a1) 95 bis 5 Gew.-% Bisphenol-A-Einheiten und
a2) 5 bis 95 Gew.-% Bisphenol-Einheiten der Formel: 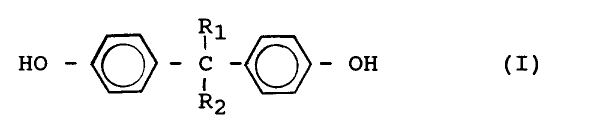 worin R₁ für Wasserstoff oder einen gegebenenfalls verzweigten Alkylrest mit 1 bis 6 Kohlenstoffatomen und R₂ für einen gegebenenfalls verzweigten Alkylrest mit 1 bis 6 Kohlenstoffatomen, für einen gegebenenfalls substituierten Cycloalkylrest mit 5 bis 16 Kohlenstoffatomen, für Phenyl, Benzyl und/oder 2-Phenylethyl, sowie R₁ und R₂ gemeinsam für einen ggfs. substituierten Cycloalkylidenrest mit 4 bis 16 Kohlenstoffatomen stehen können,
und mindestens einer darauf aufgebrachten, UV-Absorber enthaltenden, thermoplastischen Schicht TS aus einem Polymethacrylat D), aufgebaut aus:
d1) 0,01 bis 40 Gew.-Teilen UV-Absorber und/oder UV-absorbierenden Monomeren und
d2) 99,99 bis 60 Gew.-Teilen eines mit dem Co-Polycarbonat A) verträglichen Methacrylat-Copolymerisats B),
dadurch gekennzeichnet, daß das Methacrylat-Copolymerisat B) aufgebaut ist aus:
b1) 99 bis 1 Gew.-% Methylmethacrylat-Einheiten und ggfs weiteren von b2) verschiedenen α,β-ungesättigten Monomeren in Mengen von 0 bis 40 Gew.-% und
b2) 1 bis 99 Gew.-% Acryl- und/oder Methacrylestereinheiten der Formel II mit carbocyclischen Gruppen im Esterrest: 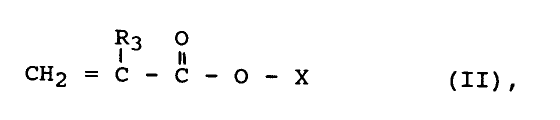 worin R₃ für Wasserstoff oder Methyl, sowie X für Y oder Q-Y steht, wobei Y für einen ggfs. substituierten Cycloalkylrest mit 5 bis 12 Kohlenstoffatomen oder für einen ggfs. alkyl- bzw. oxialkylsubstituierten Arylrest mit 6 bis 12 Kohlenstoffatomen, und Q für eine Alkylengruppe mit 1 bis 6 Kohlenstoffatomen, die auch verzweigt sein kann, oder für eine Oxialkylengruppe mit 2 bis 6 Kohlenstoffatomen stehen können und
daß das Methacrylat-Copolymerisat B) ein Molekulargewicht von mindestens 3 x 10⁴ Dalton besitzt, sowie daß sich die Anteile der Monomerengruppen a1) und a2) einerseits sowie b1) und b2) andererseits zu 100 Gew.-% ergänzen.

2. Mehrschichtige Kunststoffkörper gemäß Anspruch 1, dadurch gekennzeichnet, daß Methacrylat-Copolymerisat B) teilweise oder vollständig durch ein mindestens zweiphasiges Schlagzähmodifizierungsmittel C) ersetzt ist, aufgebaut aus:
c1) 20 bis 90 Gew.-Teilen mindestens einer ggfs vernetzten Zähphase mit einer Glasübergangstemperatur Tg < 10 Grad C und
c2) 80 bis 10 Gew.-% mindestens eines mit der Zähphase c1) wenigstens teilweise kovalent verknüpften, mit dem Co-Polycarbonat A) verträglichen Copolymerisat, das in der Zusammensetzung dem Methacrylat-Copolymerisat B) gemäß Anspruch 1 entspricht.

3. Verfahren zur Herstellung eines mehrschichtigen Kunststoffkörpers gemäß den Ansprüchen 1 und 2, dadurch gekennzeichnet, daß die Schicht aus Polymethacrylat D) in Schichtdicken von 1 bis 1000 µm mittels Coextrusion und/oder Lackierung aufgetragen wird.
